(19) **Europäisches Patentamt European Patent Office Office européen des brevets**

(11) **EP 2 329 946 B1**

(12) **FASCICULE DE BREVET EUROPEEN**

(45) Date de publication et mention de la délivrance du brevet:
**21.03.2012 Bulletin 2012/12**

(51) Int Cl.:
***B32B 7/06*** *(2006.01)*

(21) Numéro de dépôt: **10188750.3**

(22) Date de dépôt: **25.10.2010**

(54) **Cale pelable à épaisseurs multiples**

Abziehbares Zwischenstück aus mehreren Schichten

Multiple thicknesses peelable shim

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.12.2009 FR 0958680**

(43) Date de publication de la demande:
**08.06.2011 Bulletin 2011/23**

(73) Titulaire: **Gastel, Daniel André
78370 Plaisir les Gatines (FR)**

(72) Inventeur: **Gastal, Daniel André
78370 Plaisir Les Gatines (FR)**

(74) Mandataire: **Thinat, Michel
Cabinet Weinstein
56 A, rue du Faubourg
Saint-Honoré
75008 Paris (FR)**

(56) Documents cités:
**FR-A1- 2 831 095     US-A- 4 526 641
US-A- 5 853 838**

**Description**

L'invention concerne en général les cales d'épaisseur.

Plus précisément, l'invention concerne, selon un premier aspect, un produit stratifié présentant une épaisseur réglable par délitage, ce produit comprenant un empilement de feuilles présentant chacune une résistance intrinsèque au déchirement, et adhérant l'une à l'autre par une force de liaison plus faible que la résistance des feuilles au déchirement, ce dont il résulte que chaque feuille peut être détachée de l'empilement sans se déchirer.

Des produits de ce type sont enseignés dans le brevet d'invention FR2831095B1, et sont notamment utilisés comme cales de réglage pour des ensembles mécaniques. Ces ensembles mécaniques présentent généralement des jeux importants en certains points, résultant de la combinaison des tolérances de fabrication. Ces jeux sont compensés en insérant des cales.

L'épaisseur de ces cales est ajustée en retirant les feuilles avant ou arrières une à une, jusqu'à ce que l'épaisseur recherchée soit atteinte.

Ces cales offrent une rigidité en planéité qui permet d'ajuster avec précision des écarts entre des surfaces parallèles.

Cependant la rigidité en planéité des cales stratifiées, avantageuse pour ajuster des écarts en gardant le parallélisme entre surfaces en regard, pose un problème si on veut jouer sur le parallélisme, par exemple pour adapter un alignement.

Dans d'autres domaines technologiques tels que le bâtiment, le document US 5,853,838 divulgue une utilisation de cales biseautées avec un angle fixe. Ces cales présentent de nombreux inconvénient pour les ajustages de précision car elles ne permettent pas d'ajuster simultanément un angle et une épaisseur.

Pour remédier aux problèmes posés par l'état antérieur de la technique, l'invention a pour objet une cale d'épaisseur qui permet d'ajuster simultanément au moins deux épaisseurs, comprenant une plaque plane et au moins deux piles distinctes, une première pile comprenant un empilement de feuilles reliées l'une à l'autre par un film de résine qui assure une force de cohésion entre feuilles supérieure à une valeur minimale de maintien de ladite première pile rigide dans un plan et inférieure à une valeur maximale qui permet de peler un premier nombre de feuilles à chacune desquelles on applique successivement une force de séparation supérieure à ladite première valeur maximale pour obtenir une première épaisseur locale, et une deuxième pile comprenant un empilement de feuilles reliées l'une à l'autre par un film de résine qui assure une force de cohésion entre feuilles supérieure à une valeur minimale de maintien de ladite deuxième pile rigide dans un plan et inférieure à une valeur maximale qui permet de peler un deuxième nombre de feuilles à chacune desquelles on applique successivement une force de séparation supérieure à ladite première valeur maximale pour obtenir une deuxième épaisseur locale.

Avantageusement, la plaque plane comprend un empilement de feuilles reliées l'une à l'autre par un film de résine qui assure une force de cohésion entre feuilles supérieure à une valeur minimale de maintien de ladite plaque plane dans un plan et inférieure à une valeur maximale qui permet de peler un nombre global de feuilles à chacune desquelles on applique successivement une force de séparation supérieure à ladite première valeur maximale pour obtenir une épaisseur globale.

Particulièrement, les dits films de résine comprennent une première résine à un état final de polymérisation obtenue à haute température.

Particulièrement aussi, chaque pile est reliée à la plaque par un film comprenant une deuxième résine à un état final de polymérisation obtenue à température ambiante.

Dans un premier mode de réalisation, la cale d'épaisseur comprend des feuilles constituées de métal.

Dans un deuxième mode de réalisation, indépendamment ou en combinaison avec le premier mode de réalisation, la cale d'épaisseur comprend des feuilles constituées de matériau tissé imprégné d'une même résine que celle des films reliant les feuilles.

L'invention a aussi pour objet un procédé de calage d'une première pièce comportant une première surface sur une deuxième pièce comportant une deuxième surface en regard de ladite première surface et non parallèle à ladite première surface, comprenant des étapes consistant à :

- prendre une cale d'épaisseur comprenant une plaque plane et au moins deux piles distinctes de feuilles reliées l'une à l'autre par un film de résine qui assure une force de cohésion entre feuilles supérieure à une valeur minimale de maintien des piles rigides dans un plan et inférieure à une valeur maximale qui permet de peler indépendamment les feuilles de la première pile et les feuilles de la deuxième pile;

- arracher successivement un premier nombre de feuilles sur la première pile jusqu'à obtenir une première épaisseur de cale qui convient à combler un premier écart entre les deux surfaces et successivement un deuxième nombre de feuilles sur la deuxième pile jusqu'à obtenir une deuxième épaisseur de cale qui convient à combler un deuxième écart entre les deux surfaces;

- placer la plaque plane sur la première surface de façon à ce que le sommet de la première pile et le sommet de la deuxième pile entrent en contact avec la deuxième surface pour combler respectivement le premier et le deuxième écart entre les surfaces.

L'invention a encore pour objet un procédé de fabrication d'une cale d'épaisseur, comprenant des étapes dans lesquelles :

- on empile une première quantité prédéterminée de feuilles ayant une même première épaisseur et couvertes d'un film de résine non polymérisée pour obtenir un premier empilement;
- on amène la résine à un état de polymérisation qui assure une force de cohésion entre feuilles supérieure à une valeur minimale de maintien de l'empilement obtenu rigide dans un plan, et inférieure à une valeur maximale qui permet de peler les feuilles une à une en leur appliquant successivement une force de séparation supérieure à ladite première valeur maximale ;
- on découpe au moins deux piles dans ledit empilement obtenu et on colle les dites piles découpées sur une plaque plane.

Avantageusement, pour réaliser la plaque plane :

- on empile une deuxième quantité prédéterminée de feuilles ayant une même deuxième épaisseur et couvertes d'un film de résine non polymérisée pour obtenir un deuxième empilement;

- on amène la résine à un état de polymérisation qui assure une force de cohésion entre feuilles supérieure à une valeur minimale de maintien de l'empilement obtenu rigide dans un plan, et inférieure à une valeur maximale qui permet de peler les feuilles une à une en leur appliquant successivement une force de séparation supérieure à ladite première valeur maximale.

Particulièrement, pour polymériser la résine des films, on amène les empilements obtenus à une haute température correspondant à un état final de polymérisation.

Particulièrement aussi, on colle les dites piles au moyen d'une deuxième résine qui atteint un état final de polymérisation à température ambiante.

Selon différentes alternatives possibles de mise en oeuvre, on utilise des feuilles constituées de métal et/ou des feuilles constituées de matériau tissé imprégnés d'une même résine que celle des films reliant les feuilles.

Lorsqu'on utilise des feuilles constituées de matériau tissé imprégnés d'une même résine que celle des films reliant les feuilles, avant de coller les piles sur la plaque, on amène les empilements de feuilles à une température supérieure à ladite haute température de polymérisation.

D'autres caractéristiques et avantages de l'invention ressortiront clairement de la description qui en est faite ci-dessous, à titre indicatif et nullement limitatif, en référence aux figures annexées, parmi lesquelles :

- la figure 1 est une vue en perspective d'un produit stratifié métallique conforme à l'invention,

- la figure 2 est une vue en perspective d'un produit stratifié composite conforme à l'invention,
- la figure 3 montre un exemple d'utilisation d'une cale conforme à l'invention.

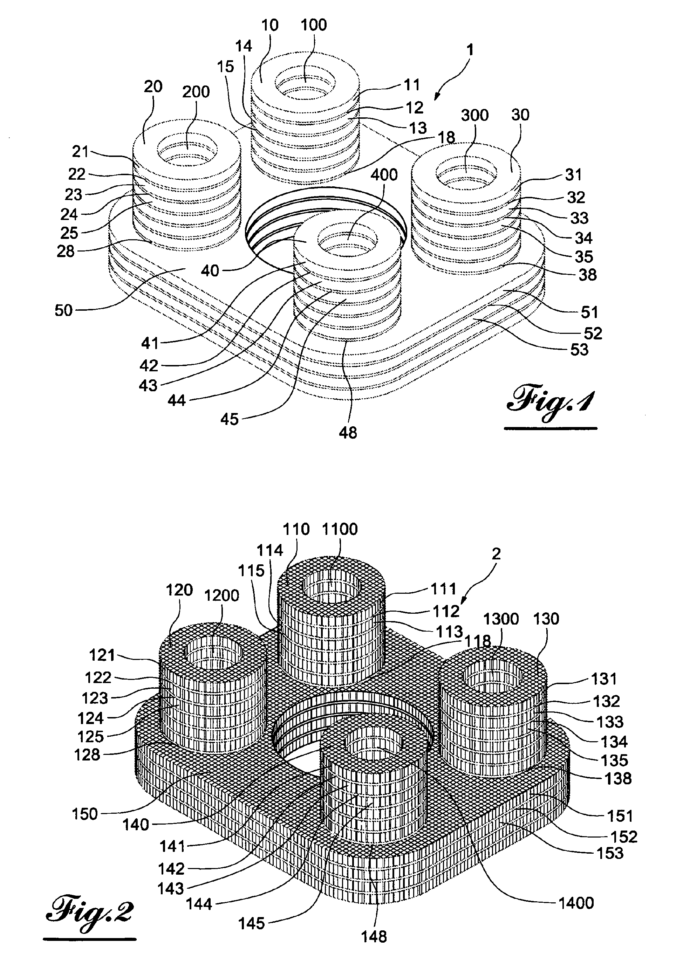

En référence à la figure 1, une cale d'épaisseur 1 comprend une plaque plane 50 et, dans l'exemple illustré, quatre piles 10, 20, 30, 40 distinctes.

La pile 10 comprend un empilement de feuilles 11, 13, 15 en quantité prédéterminée, reliées l'une à l'autre par un film 12, 14 de résine. Chaque film de résine assure entre les deux feuilles adjacentes, une force de cohésion qui est supérieure à une valeur minimale de maintien de la pile de manière rigide dans un plan. D'autre part la force de cohésion est inférieure à une valeur maximale qui permet de peler un premier nombre de feuilles parmi les feuilles 11, 13, 15 à chacune desquelles on applique successivement une force de séparation supérieure à la première valeur maximale. On obtient ainsi une première épaisseur locale qui est égale à la somme de l'épaisseur de la plaque 50, des épaisseurs des feuilles non pelées et des films qui les relient. L'épaisseur des films est généralement négligeable devant l'épaisseur des feuilles.

La pile 20 comprend un empilement d'une même quantité prédéterminée que la pile 10 de feuilles 21, 23, 25 reliées l'une à l'autre par un film 22, 24 de résine qui assure de préférence la même force de cohésion entre feuilles que les films de la pile 10 qui permet de peler un deuxième nombre de feuilles parmi les feuilles 21, 23, 25 à chacune desquelles on applique successivement une force de séparation supérieure à la première valeur maximale. On obtient ainsi une deuxième épaisseur locale qui est égale à la somme de l'épaisseur de la plaque 50, des épaisseurs des feuilles non pelées et des films qui les relient.

Les deux piles 10, 20 fixées sur la plaque 50 permettent d'utiliser la cale d'épaisseur 1 pour ajuster simultanément deux épaisseurs locales égales en pelant le même nombre de feuilles sur les deux piles 10 et 20. La cale d'épaisseur 1 ainsi constituée, permet avantageusement d'obtenir deux épaisseurs locales différentes en pelant un deuxième nombre de feuilles différent du premier nombre avec un écart entre les deux épaisseurs parfaitement maîtrisable car proportionnel à la différence des nombres de feuilles pelées.

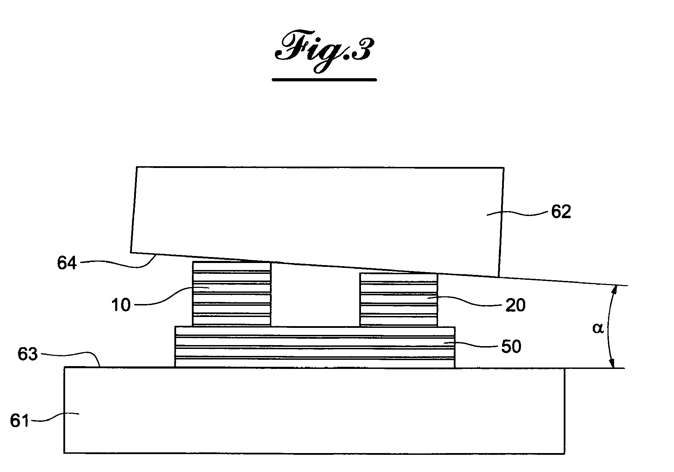

Le procédé de calage illustré par la figure 3 utilise la cale de l'invention pour caler une première pièce 61 sur une deuxième pièce 62. La pièce 61 comporte une première surface 63 et la pièce 62 comporte une deuxième surface 64 en regard de la première surface 63. Le but du procédé est de caller deux pièces lorsque les deux surfaces 63, 64 ne sont pas rigoureusement parallèles l'une à l'autre ou que l'on attend de la cale de remédier à un défaut d'alignement en imposant un angle $\alpha$ entre deux surfaces par exemple pour réaligner un propulseur dans un avion ou un engin spatial.

Dans une première étape, on prend une cale d'épaisseur 1 comprenant la plaque plane 50 et au moins deux piles 10, 20 distinctes ayant initialement un même nombre de feuilles 11, 13, 15, 21, 23, 25 reliées l'une à l'autre par les films 12, 14, 22, 24 de résine permettant de peler indépendamment les feuilles de la première pile 10 et les feuilles de la deuxième pile 20.

Dans une deuxième étape, on arrache successivement un premier nombre n1 de feuilles sur la pile 10 jusqu'à obtenir une première épaisseur de cale qui convient à combler un premier écart entre les deux surfaces 63, 64 et successivement un deuxième nombre n2 de feuilles sur la deuxième pile jusqu'à obtenir une première épaisseur de cale qui convient à combler un deuxième écart entre les deux surfaces 63, 64.

Si on veut obtenir un angle $\alpha$ entre les deux surfaces 63, 64, connaissant l'épaisseur $\varepsilon$ d'une feuille, l'épaisseur $\nu$ d'un film recouvrant une feuille et la distance $\delta$ séparant les centres des deux piles 10 et 20. Après avoir arraché le nombre n1 de feuilles sur la pile 10, on arrache un nombre de feuilles n2 donné par la formulé :

$$n2 = n1 + \frac{\delta * \mathrm{tg}\alpha}{\varepsilon + \upsilon}$$

Dans une troisième étape, on place la plaque plane 50 sur la première surface 63 de façon à ce que le sommet, notamment une arrête de la première pile 10 et le sommet, notamment une arrête de la deuxième pile 20 entrent en contact avec la deuxième surface 64 pour combler respectivement le premier et le deuxième écart entre les surfaces.

Sur la figure 1, les piles 30, 40 comprennent respectivement un empilement de feuilles 31, 33, 35 et un empilement de feuilles 41, 43, 45 en quantités égales à celles des cales 10 et 20, reliées l'une à l'autre respectivement par un film 32, 34 et un film 42, 44 de résine. De même que pour les piles 10 et 20, chaque film de résine assure entre les deux feuilles adjacentes, une force de cohésion qui est supérieure à une valeur minimale de maintien de la pile de manière rigide dans un plan. D'autre part la force de cohésion est inférieure à une valeur maximale qui permet de peler un troisième nombre de feuilles parmi les feuilles 31, 33, 35 et un quatrième nombre de feuilles parmi les feuilles 41, 43, 45 à chacune desquelles on applique successivement une force de séparation supérieure à la première valeur maximale. On obtient ainsi une troisième et une quatrième épaisseur locale qui sont égales chacune à la somme de l'épaisseur de la plaque 50, des épaisseurs des feuilles non pelées et des films qui les relient sur chacune d'entre elles. L'épaisseur des films reste négligeable devant l'épaisseur des feuilles.

La présence de quatre piles offre l'avantage supplémentaire de pouvoir régler un non parallélisme dans deux directions quelconques du plan de la plaque 50.

La plaque plane 50 peut être massive, l'ajustement en épaisseur et en orientation de l'écart, souvent nommé jeu dans le domaine technique, entre deux pièces mécaniques se faisant alors par enlèvement d'un même nombre de feuilles sur toutes les piles de la cales puis des nombres différents en fonction des orientations de surfaces désirées ou imposées.

Avantageusement, la plaque 50 illustrée par la figure 1 comprend un empilement de feuilles 51, 53, reliées l'une à l'autre par un film 52 de résine qui assure une force de cohésion entre feuilles supérieure à une valeur minimale de maintien de la plaque rigide dans un plan et inférieure à une valeur maximale qui permet de peler un cinquième nombre de feuilles 51, 53 à chacune desquelles on applique successivement une force de séparation supérieure à la première valeur maximale pour obtenir une épaisseur globale. Les feuilles de la plaque 50 peuvent avoir une épaisseur égale ou une épaisseur différente de celles des piles 10, 20, 30.

Cet agencement permet dans un premier temps d'ajuster rapidement une épaisseur globale de la cale 1 en arrachant des feuilles de la plaque 50 puis d'ajuster angles et épaisseurs en arrachant des feuilles des piles.

Les films de résine des piles et éventuellement de la plaque, comprennent une première résine à un état final de polymérisation obtenue à haute température. La résine est de type thermodurcissable comme par exemple une résine époxy.

Chaque pile 10, 20, 30, 40 est reliée à la plaque 50 par un film 18, 28, 38, 48 comprenant une deuxième résine à un état final de polymérisation obtenue à température ambiante.

Chaque pile 10, 20, 30, 40 comprend un perçage 100, 200, 300, 400 pour y faire passer des tiges de fixation de pièces entre lesquelles la calle est introduite. Ces ouvertures peuvent être utilisées dans le procédé de fabrication pour centrer les piles sur la plaque 50.

La cale 1 de la figure 1 comprend des feuilles constituées de métal.

La figure 2 illustre une cale d'épaisseur 2 comprenant des feuilles constituées de matériau tissé imprégné d'une même résine que celle des films reliant les feuilles. Ce type de cale en matériau composite procure un allègement de structure fort appréciable pour les économies d'énergie lorsqu'elle est utilisée dans un véhicule spatial, aérien, maritime ou terrestre.

La cale d'épaisseur 2 comprend une plaque plane 150 et, dans l'exemple illustré, quatre piles 110, 120, 130, 140 distinctes.

La pile 110 comprend un empilement de feuilles 111, 113, 115 en quantité prédéterminée, reliées l'une à l'autre par un film 112, 114 de résine. Chaque film de résine assure entre les deux feuilles adjacentes, une force de cohésion qui est supérieure à une valeur minimale de maintien de la pile de manière rigide dans un plan. D'autre part la force de cohésion est inférieure à une valeur maximale qui permet de peler un premier nombre de feuilles parmi les feuilles 111, 113, 115 à chacune desquelles on applique successivement une force de séparation supérieure à la première valeur maximale. On obtient ainsi une première épaisseur locale qui est égale à la somme de l'épaisseur de la plaque 150, des épaisseurs des feuilles non pelées et des films qui les relient. L'épaisseur des films est généralement négligeable devant l'épaisseur des feuilles.

La pile 120 comprend un empilement d'une même quantité prédéterminée que la pile 110 de feuilles 121, 123, 125 reliées l'une à l'autre par un film 122, 124 de résine qui assure de préférence la même force de cohésion entre feuilles que les films de la pile 110 qui permet de peler un deuxième nombre de feuilles parmi les feuilles 121, 123, 125 à chacune desquelles on applique successivement une force de séparation supérieure à la première valeur maximale. On obtient ainsi une deuxième épaisseur locale qui est égale à la somme de l'épaisseur de la plaque 150, des épaisseurs des feuilles non pelées et des films qui les relient.

Les piles 130, 140 comprennent respectivement un empilement de feuilles 131, 133, 135 et un empilement de feuilles 141, 143, 145 en quantités égales à celles des piles 110 et 120, reliées l'une à l'autre respectivement par un film 132, 134 et un film 142, 144 de résine. De même que pour les piles 110 et 120, chaque film de résine assure entre les deux feuilles adjacentes, une force de cohésion qui est supérieure à une valeur minimale de maintien de la pile de manière rigide dans un plan. D'autre part la force de cohésion est inférieure à une valeur maximale qui permet de peler un troisième nombre de feuilles parmi les feuilles 131, 133, 135 et un quatrième nombre de feuilles parmi les feuilles 141, 143, 45 à chacune desquelles on applique successivement une force de séparation supérieure à la première valeur maximale. On obtient ainsi une troisième et une quatrième épaisseur locale qui sont égales chacune à la somme de l'épaisseur de la plaque 150, des épaisseurs des feuilles non pelées et des films qui les relient sur chacune d'entre elles. L'épaisseur des films reste négligeable devant l'épaisseur des feuilles.

La présence de quatre piles offre l'avantage supplémentaire de pouvoir régler un non parallélisme dans deux directions quelconques du plan de la plaque 150.

La plaque plane 150 peut être massive, en métal ou en matériau composite monolithique, l'ajustement en épaisseur et en orientation de l'écart, souvent nommé jeu dans le domaine technique, entre deux pièces mécaniques se faisant alors par enlèvement d'un même nombre de feuilles sur toutes les piles de la cales puis des nombres différents en fonction des orientations de surfaces désirées ou imposées.

Avantageusement, la plaque 150 illustrée par la figure 2 comprend un empilement de feuilles 151, 153, reliées l'une à l'autre par un film 152 de résine qui assure une force de cohésion entre feuilles supérieure à une valeur minimale de maintien de la plaque rigide dans un plan et inférieure à une valeur maximale qui permet de peler un cinquième nombre de feuilles 151, 153 à chacune desquelles on applique successivement une force de séparation supérieure à la première valeur maximale pour obtenir une épaisseur globale. Les feuilles de la plaque 50 peuvent avoir une épaisseur égale ou une épaisseur différente de celles des piles 110, 120, 130, 140.

Chaque pile 110, 120, 130, 140 est reliée à la plaque 150 par un film 118, 128, 138, 148 comprenant une deuxième résine à un état final de polymérisation obtenue à température ambiante.

Chaque pile 110, 120, 130, 140 comprend un perçage 1100, 1200, 1300, 1400 pour y faire passer des tiges de fixation de pièces entre lesquelles la calle est introduite. Ces ouvertures peuvent être utilisées dans le procédé de fabrication pour centrer les piles sur la plaque 150.

Le procédé de fabrication de la cale d'épaisseur 1 ou 2, comprend des étapes dans lesquelles :

- on empile une première quantité prédéterminée de feuilles ayant une même première épaisseur et couvertes d'un film de résine non polymérisée pour obtenir un premier empilement;
- on amène la résine à un état de polymérisation qui assure une force de cohésion entre feuilles supérieure à une valeur minimale de maintien de l'empilement obtenu rigide dans un plan, et inférieure à une valeur maximale qui permet de peler les feuilles une à une en leur appliquant successivement une force de séparation supérieure à ladite première valeur maximale ;
- on découpe deux ou quatre piles 10, 20, 30, 40 dans l'empilement obtenu pour la cale 1. Alternativement on découpe deux ou quatre piles 110, 120, 130, 140 dans l'empilement obtenu pour la cale d'épaisseur 2 et on colle les piles découpées sur une plaque plane 50, respectivement 150.

Avantageusement pour réaliser la plaque plane 50 ou 150 :

- on empile une deuxième quantité prédéterminée de feuilles ayant une même deuxième épaisseur et couvertes d'un film de résine non polymérisée pour obtenir un deuxième empilement;
- on amène la résine à un état de polymérisation qui assure une force de cohésion entre feuilles supérieure à une valeur minimale de maintien de l'empilement obtenu rigide dans un plan, et inférieure à une valeur maximale qui permet de peler les feuilles une à une en leur appliquant successivement une force de séparation supérieure à ladite première valeur maximale.

Pour polymériser la résine des films, on amène les empilements obtenus à une haute température correspondant à un état final de polymérisation.

On colle ensuite les piles au moyen d'une deuxième résine qui atteint un état final de polymérisation à température ambiante. Lorsqu'on utilise des feuilles de métal, les piles 10, 20, 30, 40 sont ainsi fixées respectivement par une couche de colle 28, 18, 38, 48 à la plaque 50 sans avoir besoin de faire subir un nouveau traitement thermique à la cale. Lorsqu'on utilise des feuilles constituées de matériau tissé imprégnés d'une même résine que celle des films reliant les feuilles, les piles 110, 120, 130, 140 sont ainsi fixées respectivement par une couche de colle 128, 118, 138, 148 à la plaque 150 sans avoir besoin de faire subir un nouveau traitement thermique à la cale.

Pour faciliter la pelabilité des feuilles constituées de matériau tissé imprégnés d'une même résine que celle des films reliant les feuilles, on amène les empilements obtenus à une température supérieure à la haute température de polymérisation avant de coller les piles sur la plaque. La température est choisie de façon à fragiliser légèrement les films sans en provoquer la rupture.

## Revendications

1. Cale d'épaisseur (1, 2) pour ajuster simultanément au moins deux épaisseurs, comprenant une plaque plane (50, 150) et au moins deux piles (10, 20, 30, 40) distinctes, une première pile (10) comprenant un empilement de feuilles (11, 13, 15) reliées l'une à l'autre par un film (12, 14) de résine qui assure une force de cohésion entre feuilles supérieure à une valeur minimale de maintien de ladite première pile rigide dans un plan et inférieure à une valeur maximale qui permet de peler un premier nombre de feuilles (11, 13, 15) à chacune desquelles on applique successivement une force de séparation supérieure à ladite première valeur maximale pour obtenir une première épaisseur locale, et une deuxième pile (20) comprenant un empilement de feuilles (21, 23, 25) reliées l'une à l'autre par un film (22, 24) de résine qui assure une force de cohésion entre feuilles supérieure à une valeur minimale de maintien de ladite deuxième pile rigide dans un plan et inférieure à une valeur maximale qui permet de peler un deuxième nombre de feuilles (21, 23, 25) à chacune desquelles on applique successivement une force de séparation supérieure à ladite première valeur maximale pour obtenir une deuxième épaisseur locale.

2. Cale d'épaisseur selon la revendication 1, **caractérisée en ce que** la plaque plane (50, 150) comprend un empilement de feuilles (51, 53, 151, 153) reliées l'une à l'autre par un film (52, 152) de résine qui assure une force de cohésion entre feuilles supérieure à une valeur minimale de maintien de ladite plaque plane dans un plan et inférieure à une valeur maximale qui permet de peler un nombre global de feuilles (51, 53) à chacune desquelles on applique successivement une force de séparation supérieure à ladite première valeur maximale pour obtenir une épaisseur globale.

3. Cale d'épaisseur selon l'une des revendications précédentes, **caractérisée en ce que** les dits films de résine comprennent une première résine à un état final de polymérisation obtenue à haute température.

4. Cale d'épaisseur selon l'une des revendications précédentes, **caractérisée en ce que** chaque pile (10, 20, 30, 40) est reliée à la plaque (50) par un film (18, 28, 38, 48) comprenant une deuxième résine à un état final de polymérisation obtenue à température ambiante.

5. Cale d'épaisseur (1) selon l'une des revendications précédentes, **caractérisée en ce qu'**elle comprend des feuilles constituées de métal.

6. Cale d'épaisseur (2) selon l'une des revendications précédentes, **caractérisée en ce qu'**elle comprend des feuilles constituées de matériau tissé imprégné d'une même résine que celle des films reliant les feuilles.

7. Procédé de calage d'une première pièce (61) comportant une première surface (63) sur une deuxième pièce (62) comportant une deuxième surface (64) en regard de ladite première surface et non parallèle à ladite première surface (63), comprenant des étapes consistant à :

   - prendre une cale d'épaisseur (1) comprenant une plaque plane (50) et au moins deux piles (10, 20) distinctes de feuilles (11, 13, 15, 21, 23, 25) reliées l'une à l'autre par un film (12, 14, 22, 24) de résine qui assure une force de cohésion entre feuilles supérieure à une valeur minimale de maintien des piles rigides dans un plan et inférieure à une valeur maximale qui permet de peler indépendamment les feuilles de la première pile (10) et les feuilles de la deuxième pile (20) ;
   - arracher successivement un premier nombre de feuilles sur la première pile jusqu'à obtenir une première épaisseur de cale qui convient à combler un premier écart entre les deux surfaces (62, 64) et successivement un deuxième nombre de feuilles sur la deuxième pile jusqu'à obtenir une deuxième épaisseur de cale qui convient à combler un deuxième écart entre les deux surfaces (62, 64) ;
   - placer la plaque plane (50) sur la première surface (62) de façon à ce que le sommet de la première pile (10) et le sommet de la deuxième pile (20) entrent en contact avec la deuxième surface (63) pour combler respectivement le premier et le deuxième écart entre les surfaces.

**8.** Procédé de fabrication d'une cale d'épaisseur (1), comprenant des étapes dans lesquelles :

- on empile une première quantité prédéterminée de feuilles ayant une même première épaisseur et couvertes d'un film de résine non polymérisée pour obtenir un premier empilement;
- on amène la résine à un état de polymérisation qui assure une force de cohésion entre feuilles supérieure à une valeur minimale de maintien de l'empilement obtenu rigide dans un plan, et inférieure à une valeur maximale qui permet de peler les feuilles une à une en leur appliquant successivement une force de séparation supérieure à ladite première valeur maximale ;
- on découpe au moins deux piles (10, 20, 30, 40) dans ledit empilement obtenu et on colle les dites piles découpées sur une plaque plane (50).

**9.** Procédé de fabrication selon la revendication 8, **caractérisée en ce que** pour réaliser la plaque plane (50) :

- on empile une deuxième quantité prédéterminée de feuilles ayant une même deuxième épaisseur et couvertes d'un film de résine non polymérisée pour obtenir un deuxième empilement;
- on amène la résine à un état de polymérisation qui assure une force de cohésion entre feuilles supérieure à une valeur minimale de maintien de l'empilement obtenu rigide dans un plan, et inférieure à une valeur maximale qui permet de peler les feuilles une à une en leur appliquant successivement une force de séparation supérieure à ladite première valeur maximale.

**10.** Procédé de fabrication selon la revendication 8 ou 9, **caractérisé en ce que**, pour polymériser la résine des films, on amène les empilements obtenus à une haute température correspondant à un état final de polymérisation.

**11.** Procédé de fabrication selon l'une des revendications 8 à 10, **caractérisée en ce qu'**on colle les dites piles au moyen d'une deuxième résine qui atteint un état final de polymérisation à température ambiante.

**12.** Procédé de fabrication selon l'une des revendications 8 à 11, **caractérisée en ce qu'**on utilise des feuilles constituées de métal.

**13.** Procédé de fabrication selon l'une des revendications 8 à 12, **caractérisée en ce qu'**on utilise des feuilles constituées de matériau tissé imprégnés d'une même résine que celle des films reliant les feuilles.

**14.** Procédé de fabrication selon la revendication 13, **caractérisée en ce que**, avant de coller les piles sur la plaque, on amène les feuilles constituées de matériau tissé imprégnés d'une même résine que celle des films reliant les feuilles, à une température supérieure à ladite haute température de polymérisation.

**Claims**

**1.** At thickness wedge (1, 2) to simultaneously adjust at least two thicknesses, including a flat plate (50, 150) and at least two different stacks (10, 20, 30, 40), of which a first stack (10) includes a stack of sheets (11, 13, 15) bound to one another by means of a resin film (12, 14) that ensures a cohesion force between the sheets greater than a minimum maintenance value for the first stack, which is rigid in a plane and lesser than a maximum value that allows a first number of sheets to be peeled off (11, 13, 15), to each of which a separation greater than the former maximum value is successively applied in order to obtain a first local thickness, and a second stack (20) including a stack of sheets (21, 23, 25) bound to one another by means of a resin film (22, 24) that ensures a cohesion force between sheets greater than a minimum maintenance value for the second rigid stack in a plane and lesser than a maximum value that allows for a second number of sheets (21, 23, 25) to be peeled off by successively applying a separation force greater than the former maximum value in order to obtain a second local thickness.

**2.** The thickness wedge according to claim 1, **characterized in that** the flat plate (50, 150) includes a stack of sheets (51, 53, 151, 153) bound to one another by means of a resin film (52, 152) that ensures a cohesion force between sheets greater than a minimum maintenance value for the flat plane in a plane and lesser than a maximum value that allows a total number of sheets (51, 53) to be peeled off , to each of which a separation force greater than the former maximum value is successively applied in order to obtain an overall thickness.

**3.** The thickness wedge according to one of the foregoing claims, **characterized in that** the resin films including a first resin in a final state of polymerization obtained at a high temperature.

**4.** The thickness wedge according to one of the foregoing claims, **characterized in that** each stack (10, 20, 30, 40) is bound to the plate (50) by means of a film (18, 28, 38, 48) including a second resin in a final state of polymerization obtained at room temperature.

5. The thickness wedge (1) according to one of the foregoing claims, **characterized in that** it includes sheets made of metal.

6. The thickness wedge (2) according to one of the foregoing claims, **characterized in that** it includes sheets made of woven material impregnated by the same resin as that of the films that bind the sheets.

7. A method for wedging a first piece (61) comprising a first surface (63) on a second piece (62) comprising a second surface (64) facing the first surface and not parallel to the first surface (63) including stages that consist of the following:

    - taking a thickness wedge (1) including a flat plate (50) and at least two different stacks (10, 20) of sheets (11, 13, 15, 21, 23, 25) bound to one another by means of a resin film (12, 14, 22, 24) that ensures a cohesion force between the sheets greater than a minimum maintenance value for the rigid stacks in a plane and lesser than a maximum value that allows the sheets to be peeled independently from the first stack (10) and the sheets of the second stack (20);
    - successively scratching a first number of sheets on the first stack until a first wedge thickness is obtained that is suitable for filling in a first distance between the two surfaces (62, 64), and successively a second number of sheets on the second stack until a second wedge thickness is obtained that is suitable for filling in a second distance between the two surfaces (62, 64);
    - placing the flat plate (50) on the first surface (62) so that the peak of the first stack (10) and the peak of the second stack (20) come into contact with the second surface (63) in order to fill in the first and second distance between the surfaces, respectively.

8. A manufacturing method a thickness wedge (1), including stages in which:

    - a first predetermined number of sheets having the same initial thickness and covered by a non-polymerized resin film is stacked in order to obtain a first stack;
    - the resin is brought to a state of polymerization ensuring a cohesion force between the sheets greater than a minimum maintenance value for the stack thus obtained that is rigid in a plane, and lesser than a maximum value that allows the sheets to be peeled off one by one by successively applying to them a separation force greater than the former maximum value;
    - at least two stacks (10, 20, 30, 40) are cut off from the stack obtained, and those stacks are stuck to a flat plate (50).

9. The manufacturing method according to claim 8, **characterized in that**, in order to manufacture the flat plate (50):

    - a second predetermined number of sheets having the same second thickness and covered with a non-polymerized resin film are stacked in order to obtain a second stack;
    - the resin is brought to a state of polymerization that ensures a cohesion force between sheets greater to a minimum maintenance value for the stack obtained that is rigid in a plane, and lesser than a maximum value that allows for the sheets to be peeled off one by one by successively applying to them a separation force greater than the former maximum value.

10. The manufacturing method according to claim 8 or 9, **characterized in that**, in order to polymerize the resin of the films, the stacks obtained are brought to a high temperature corresponding to a final state of polymerization.

11. The manufacturing method according to one of claims 8 - 10, **characterized in that** the stacks adhere by means of a second resin that attains a final state of polymerization at room temperature.

12. The manufacturing method according to one of claims 8 - 11, **characterized in that** sheets made of metal are used.

13. The manufacturing method according to one of claims 8 - 12, **characterized in that** sheets made of woven material, impregnated by the same resin as that of the films that bind the sheets, are used.

14. The manufacturing method according to claim 13, **characterized in that**, before sticking the stacks to the plate, the sheets made of woven material, impregnated by the same resin as that of the films binding the sheets, are brought to a temperature greater than the high polymerization temperature.

**Patentansprüche**

1. Zwischenlage (1, 2) zur gleichzeitigen Justierung von mindestens zwei Dicken, die eine ebene Platte (50, 150) und mindestens zwei unterschiedliche Stapel (10, 20, 30, 40) umfasst, wobei ein erster Stapel (10) eine Stapelung von Bögen (11, 13, 15) umfasst, die miteinander durch einen Harzfilm (12, 14) verbunden sind, der eine Kohäsionskraft zwischen den Bögen gewährleistet, die größer ist als ein minimaler Haltewert des starren ersten Stapels in einer Ebene und kleiner als ein maximaler Wert, der es erlaubt, eine erste Anzahl von Bögen (11, 13, 15) abzuziehen, auf die jeweils nacheinander eine Trennkraft ausgeübt wird, die größer ist als der erste maximale Wert, um eine erste lokale Dicke zu erhalten, und ein zweiter Stapel (20) eine Stapelung von Bögen (21, 23, 25) umfasst, die miteinander durch einen Harzfilm (22, 24) verbunden sind, der eine Kohäsionskraft zwischen den Bögen gewährleistet, die größer ist als ein minimaler Haltewert des starren zweiten Stapels in einer Ebene und kleiner als ein maximaler Wert, der es erlaubt, eine zweite Anzahl von Bögen (21, 23, 25) abzuziehen, auf die jeweils nacheinander eine Trennkraft ausgeübt wird, die größer ist als der erste maximale Wert, um eine zweite lokale Dicke zu erhalten.

2.  Zwischenlage nach Anspruch 1, **dadurch gekennzeichnet, dass** die ebene Platte (50, 150) eine Stapelung von Bögen (51, 53, 151, 153) umfasst, die miteinander durch einen Harzfilm (52, 152) verbunden sind, der eine Kohäsionskraft zwischen den Bögen gewährleistet, die größer ist als ein minimaler Haltewert der ebenen Platte in einer Ebene und kleiner als ein maximaler Wert, der es erlaubt, eine allgemeine Anzahl von Bögen (51, 53) abzuziehen, auf die jeweils nacheinander eine Trennkraft ausgeübt wird, die größer ist als der erste maximale Wert, um eine allgemeine Dicke zu erhalten.

3.  Zwischenlage nach einem der vorangehenden Ansprüche, **dadurch gekennzeichnet, dass** die Harzfilme ein erstes Harz in einem Polymerisations-Endzustand umfassen, die bei hoher Temperatur durchgeführt wird.

4.  Zwischenlage nach einem der vorangehenden Ansprüche, **dadurch gekennzeichnet, dass** jeder Stapel (10, 20, 30, 40) mit der Platte (50) durch einen Film (18, 28, 38, 48) verbunden ist, der ein zweites Harz in einem Polymerisations-Endzustand umfasst, die bei Raumtemperatur durchgeführt wird.

5.  Zwischenlage (1) nach einem der vorangehenden Ansprüche, **dadurch gekennzeichnet, dass** sie Bögen umfasst, die aus Metall bestehen.

6.  Zwischenlage (2) nach einem der vorangehenden Ansprüche, **dadurch gekennzeichnet, dass** sie Bögen umfasst, die aus gewebtem Material, getränkt mit demselben Harz wie dem der Filme, die die Bögen verbinden, bestehen.

7.  Passungsverfahren eines ersten Teils (61), das eine erste Fläche (63) aufweist, auf einem zweiten Teil (62), das eine zweite Fläche (64) gegenüber der ersten Fläche aufweist, die nicht parallel zur der ersten Fläche (63) ist, das Schritte umfasst, die bestehen im:

- Nehmen einer Zwischenlage (1), die eine ebene Platte (50) und mindestens zwei unterschiedliche Stapel von Bögen (11, 13, 15, 21, 23, 25) umfasst, die miteinander durch einen Harzfilm (12, 14, 22, 24) verbunden sind, die eine Kohäsionskraft zwischen den Bögen gewährleistet, die größer ist als ein minimaler Haltewert der starren Stapels in einer Ebene und kleiner als ein maximaler Wert, der es erlaubt, die Bögen vom ersten Stapel (10) und die Bögen vom zweiten Stapel (20) abzuziehen,
- schrittweisen Entfernen einer ersten Anzahl von Bögen auf dem ersten Stapel, bis eine erste Lagendicke entsteht, die geeignet ist, einen ersten Abstand zwischen den zwei Flächen (62, 64) auszufüllen und schrittweise eine zweite Anzahl von Bögen auf dem zweiten Stapel, bis eine zweite Lagendicke entsteht, die geeignet ist, einen zweiten Abstand zwischen den zwei Flächen (62, 64) auszufüllen,
- Platzieren der ebenen Platte (50) auf der ersten Fläche (62) derart, dass die Spitze des ersten Stapels (10) und die Spitze des zweiten Stapels (20) mit der zweiten Fläche (63) in Kontakt treten, um jeweils den ersten und den zweiten Abstand zwischen den Flächen auszufüllen.

8.  Herstellungsverfahren einer Zwischenlage (1), das die Schritte umfasst, bei denen:

- eine erste vorbestimmte Menge Bögen, die dieselbe erste Dicke haben und mit einem nicht polymerisierten Harzfilm bedeckt sind, gestapelt werden, um eine erste Stapelung zu erhalten,
- das Harz in einen Polymerisationszustand geführt wird, der eine Kohäsionskraft zwischen den Bögen gewährleistet, die größer ist als ein minimaler Haltewert der hergestellten starren Stapelung in einer Ebene und kleiner als ein maximaler Wert, der erlaubt, die Bögen einzeln abzuziehen, indem man schrittweise eine Trennkraft anwendet, die größer ist als der erste maximale Wert,
- mindestens zwei Stapel (10, 20, 30, 40) aus der hergestellten Stapelung ausgeschnitten und die ausgeschnittenen Stapel auf einer ebenen Platte (50) aufgeklebt werden.

9.  Herstellungsverfahren nach Anspruch 8, **dadurch gekennzeichnet, dass** zur Herstellung der ebenen Platte (50):

- eine zweite vorbestimmte Menge Bögen, die dieselbe zweite Dicke haben und mit einem nicht polymerisierten Harzfilm bedeckt sind, gestapelt werden, um eine zweite Stapelung zu erhalten,

- das Harz in einen Polymerisationszustand geführt wird, der eine Kohäsionskraft zwischen den Bögen gewährleistet, die größer ist als ein minimaler Haltewert der hergestellten starren Stapelung in einer Ebene und kleiner als ein maximaler Wert, der erlaubt, die Bögen einzeln abzuziehen, indem man schrittweise eine Trennkraft anwendet, die größer ist als der erste maximale Wert.

10. Herstellungsverfahren nach Anspruch 8 oder 9, **dadurch gekennzeichnet, dass** die hergestellten Stapelungen zur Polymerisierung des Harzfilms auf eine hohe Temperatur geführt werden, die einem abschließenden Polymerisationszustand entspricht.

11. Herstellungsverfahren nach einem der Ansprüche 8 bis 10, **dadurch gekennzeichnet, dass** die Stapel mit einem zweiten Harz geklebt werden, das einen abschließenden Polymerisationszustand bei Raumtemperatur erreicht.

12. Herstellungsverfahren nach einem der Ansprüche 8 bis 11, **dadurch gekennzeichnet, dass** Bögen, die aus Metall bestehen, verwendet werden.

13. Herstellungsverfahren nach einem der Ansprüche 8 bis 12, **dadurch gekennzeichnet, dass** Bögen verwendet werden, die aus gewebtem Material, getränkt mit demselben Harz wie dem der Filme, die die Bögen verbinden, verwendet werden.

14. Herstellungsverfahren nach Anspruch 13, **dadurch gekennzeichnet, dass**, bevor die Stapel auf die Platte geklebt werden, die Bögen, die aus gewebtem Material bestehen, die mit demselben Harz getränkt sind wie dem der Filme, die die Bögen verbinden, auf eine Temperatur geführt werden, die höher ist als die hohe Polymerisationstemperatur.

_Fig.1_

_Fig.2_

# *Fig.3*

**EP 2 329 946 B1**

**Documents brevets cités dans la description**

- FR 2831095 B1

- US 5853838 A